# EUROPÄISCHE PATENTANMELDUNG

(11) **EP 2 530 229 A1**
(43) Veröffentlichungstag der Anmeldung: **05.12.2012**
(21) Anmeldenummer: 12004104.1
(22) Anmeldetag: 27.05.2012
(51) Int. Cl.: E06B 3/263

(54) **Kanteln für Energiesparfenster**

(30) Priorität: 28.05.2011 DE 102011111373
(71) Anmelder: Glaser, Helmuth, 36199 Rotenburg an der Fulda (DE)
(72) Erfinder: Glaser, Helmuth, 36199 Rotenburg an der Fulda (DE)

(57) **Zusammenfassung**

Die Erfindung betrifft verschiedene Kanteln zur Herstellung von allen bekannten Fenster- Tür- und Sonderprofilen (s. Beispiel Fensterprofil Fig.1). Die Decklagen (Decklamellen 4,8,9,15,16,20) und die Mittellagen (Miftellamellen 5 -7,10 -14, 17-19, Anzahl der Lamellen unterschiedlich), können sowohl aus Vollholz als auch aus Vollholz modifiziert sein, mit verschieden hergestellten Aussparungen (5,6,9,10,13,14,15,17,18) sowie den Lamellen- Varianten Fig. 2 (a,b,c,d,e,f,g,h), um Wärmedämm-Material einzulegen bzw. einzuleimen. Wetterseitig können die Lamellen auch aus WPC (2,9,16) mit oder ohne Aussparungen entsprechend der genannten Möglichkeiten, bestehen.

## Beschreibung

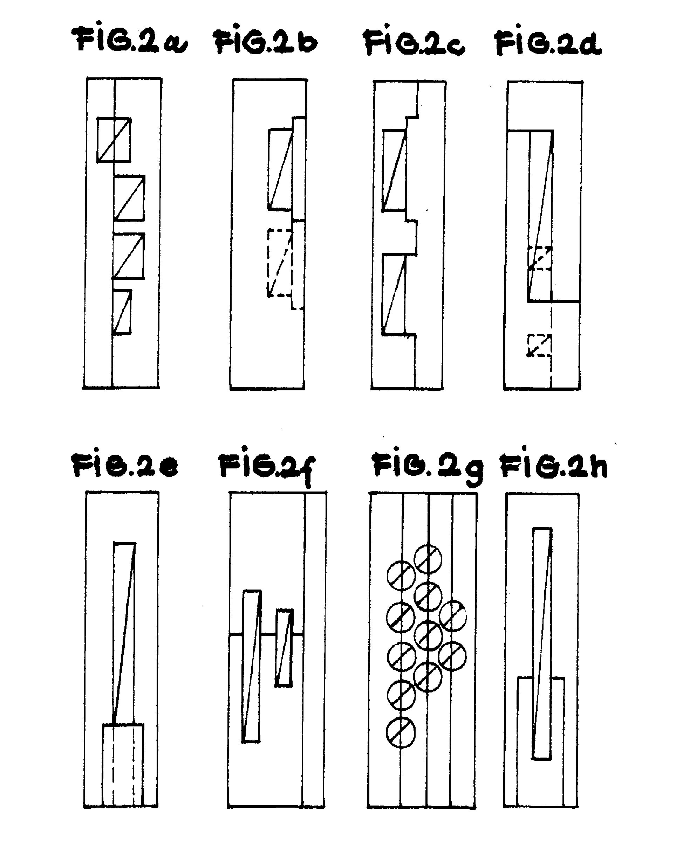

Die Erfindung betrifft verschiedene Kanteln zur Herstellung von allen bekanten Fenster- Tür- und Sonderprofilen (s. Beispiel Fensterprofil Fig, 1). Die Decklagen (Decklamellen 4, 8, 9, 15, 16, 20) und die Mittellagen (Mittellamellen 5-7, 10-14, 17-19, Anzahl der Lamellen unterschiedlich), können sowohl aus Vollholz als auch aus Vollholz modifiziert sein, mit verschieden hergestellten Aussparungen (5, 6, 9, 10, 13, 14, 15, 17, 18) sowie den Lamellen- Varianten Fig.2 (a, b, c, d, e, f, g, h), um Wärmedämm-Material einzulegen bzw. einzuleimen. Wetterseitig können die Lamellen auch aus WPC (2, 9, 18) mit oder ohne Aussparungen entsprechend der genannten Möglichkeiten, bestehen.

Alle Modifizierungen sind so angelegt, dass die Fräslinie des Profils im Vollholz oder Vollmaterial erfolgt, ohne dass die Dämmeinlagen sichtbar bzw. beschädigt werden. Auch die unterschiedlichen Eckverbindungen sind mit den zuvor benannten Möglichkeiten durchzuführen.

Bisher bekannte Kanteln, auch Verbundprofile hauptsächlich für den Fensterbau, bestehen entweder aus Kunststoff oder Metall mit ausgeschäumten Hohl - räumen als Wärmedämmung oder setzten sich z.B. aus einer Kombination aus Holz/Purenit/Holz, Holz/Purenit/Polyurethan/Holz, sowie durchaus auch ökologisch wertvoll, aus Holz/Kork/Holz, bzw. Holz/Kork/Holz/Kork/Holz, zusammen.

Eine weitere Kantel - Entwicklung auf dem Markt, ist die so genannte Holzkantel mit Dämmkammer-Technologie, sehr aufwendig herzustellen und teuer, hat die Erwartungen bisher nicht erfüllt.

Eine weitere Kantel besteht aus Einzellemellen, einige mit einer rechteckförmigen Ausfräsung (Aussparung) mit einem Dämmstoff gefüllt, wobei gegen die freie Seite der Aussparung, gegen den Wärmedämmstoff, eine geschlossene Seite einer Lamelle geleimt wird. Da jeweils ein großer Hohlraum (Aussparung) für die Dämmeinlage ausgefräst werden muss, entsteht ein unverhältnismäßig hoher Materialveriust und die fertigen Profile sind labil gegen Verdrehungen und waagerechte Belastungen. Vor allem dann, wenn weichere Dammstoffe als Kork, in den Hohlraum eingelegt werden, ist so gut wie keine Haftung mit der anschließenden Lamelle vorhanden.

Der Antragsteller selbst hat 2003 eine Fensterkantel für die Herstellung eines Energiesparfensters (Gebrauchsmuster DE 20 2004 004 876 U1) und 2010 Kanteln ebenfalls für die Herstellung von Energiesparfenstem und anderen Profilen (Gebrauchsmuster DE 20 2010 004 095.7) beim Deutschen Patentamt angemeldet. Diese Kanteln werden durch diese Anmeldung nicht ersetzt, sind aber auf Grund der bisher damit gemachten Erfahrung, in weiterentwickelter modifizierter Form, Grundlage der Erfindung dieser neuen Kanteln. Die Herstellungsart, die Modifizierung und die Auswahl der Dämmstoffe, der vom Antragsteller bisher angemeldeten Kanteln, sind mit den Kanteln dieser Anmeldung kombinierbar.

Der Erfindung liegt die Aufgabe zugrunde, Bewährtes weiter zu entwickein und auf dem Markt vorhandene Materialien im Verbund, als zusammengesetzte verleimt Querschnitte, wirtschaftlich und wärmetechnisch optimiert, einzusetzen. Angesichts der Klimaveränderung und dem Bemühen, durch die Einsparung von fossilen Brennstoffen, weniger CO2 zu erzeugen und alle Baustoffe sowie Materialien abzubauen, die den Grundsätzen der Nachhaltigkeit widersprechen, entstehen durch diese Erfindung neue Kanteln, wie sie bisher in dieser Form nicht bekannt sind und demzufolge auch nicht zum Stand der Technik gehören.

Die Erfindung enthält eine Reihe von neuen Ideen und Verbesserungen, hinsichtlich des Herstellungsverfahrens und der Materialoptimierung, die letztlich auf die neue Energleelnsparverordnung (EnEV), dem Bestreben nach einer sauberen Umwelt, dem Einsatz von emeuerbaren Energien, der Verwendung von nachwachsenden Rohstoffen und der langjährigen Erfahrung des Antragstellers im ökologischen Wohnungsbau, bis hin zur Passivbauweise, zurückzuführen sind.

Technisch sind alle Kanteln wirtschaftlich von der Industrie herzustellen und danach von jedem Holzfenster- Holztüren- Holzelufenster- und Holzalutttren-Hersteller zu Profilen aller Art für Fassaden- und Dachflächen, zu verarbeken. Die Grundlage aller Kanteln sind Holz, auch Thermoholz, modifizierte Hölzer, WPC, Kork, Holzwerkstoff (MDF), hoch verdichtete Stroh- Flachs- und Hanfwerkstoffe, sowie modifizierte verleimte wasserfeste Sperrholzplatten, Weichdämmstoffe und ein vom Antragsteller selbst entwickelter Dämmstoff. Alle Materialien, außer den Decklagen Holz und WPC, haben günstige Wärmeleltzahlen von 0,045 bis 0,075 W/mK, eingeschlossene Luft der ausgefrästen Aussparungen der verleimten Sperrholzlagen sogar 0,025 W/mK und das Vakuum- Paneel 0,008 W/mK. Die Weichdämmstoffe haben Wärmeleitzahlen von 0,010 bis 0,045 W/mK. Die Dicken, Breiten und Längen der Kanteln, sowie die Modifizierung der Wahl des Wärmedämmstoffes und der Art des Einbaus in die Kanteln, ergeben sich aus dem Einsatzziel, dem gewünschten Profil, den dafür erforderlichen statischen Erfordernissen und den geforderten U- Werten, entsprechend der EnEV.

Die gestellte Aufgabe wird auch dadurch gelöst, dass die Erfindung alle bekanten IV Profile, auch Sonderprofile im Fensterbau, insbesondere auch die Profile der bekanten Dachflächenfenster - Hersteller, wie Roto, Velux, Fakro und anderen, abdeckt.

Bei der Erfindung hat der Antragsteller besonders auf die Ökologie, die Ökonomie und die Gesundheit, also auf die Nachhaltigkeit von Materialien und Konstruktionen, Wert gelegt.

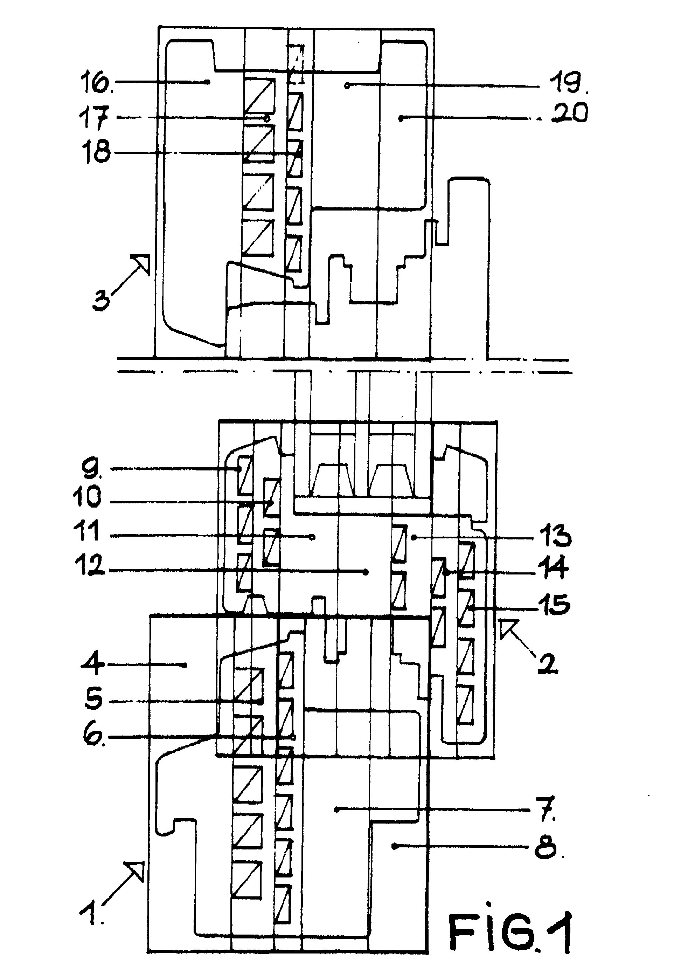

Im Einzelnen sind die Erfindungsmerkmale den nachfolgenden Zeichnungen (Fig.1 und den Alternativen zu den Lamellen Fig.2 a-h) und den Erläuterungen dazu, zu entnehmen: Fig. 1, Kanteln und Profile (1, 2, 3) setzten sich in dem gezeigten Beispiel aus 5 bzw. aus 7 Sandwichteilen (Lamellen) zusammen. Es sind sowohl in den Decklagen wie in den Mittellegen teilweise Wärmedämmung eingebaut, so wie es die Anforderungen an das Profil in diesem Fall verlangten. Es sind auch andere Modiflkationen möglich.

Neu ist, dass die Lamellen durchgehend angeordnet sind und dass in einigen in Längsrichtung der Lamellen rechteckige Aussparungen (5, 6, 9, 10, 13, 14, 15, 17, 18) eingefräst sind, die jeweils durch einen Steg, entsprechend der Tiefe der Ausfräsungen, die Ausfräsungen (Aussparungen) trennen. Der Vorteil ist, dass die Stege mit der durchgehenden Seite der nächsten Lamelle bzw. der Rückseite der Vorderlamelle, welche auf der Gegenseite ebenfalls ausgefräst sein kann (4, 5, 10, 11, 12,13,14, 16, 17), verleimt sind und dadurch der Kantel bzw. dem Profil eine hohe Steifigkeit gegen Verdrehung und waagerechter Belastung verleihen. Durch diese Art der Modifikation muss nicht unbedingt der Wärmedämmstoff mit der Anschlusslamelle, wie z.B. beim Kork, verleimt sein, d.h. es kann wärmetechnisch Dämmstoff mit einer noch kleineren Wärmeteitzahl, also weiches und leichtes Material eingesetzt werden, welches wiederum letztlich zu weniger Ausfräsungen (Aussparungen) mit Dämmstofffüllungen führt und dadurch die Stabilität der Kantel bzw. des Profils weiter erhöht.

Neu ist auch die Lamellen- Alternative Fig. 2 a. Durch diese Art der Modifikation können In der gleichen Lamelle die Aussparungen auch unterschiedlich tief ausgefräst werden, sodass die Wärmedämmung noch besser dem Profil angepasst werden kann. Statt dem Aufleimen einer durchgehenden Lamelle auf die Aussparungen bzw. der dazwischen angeordneten Stege, kann auch die Verleimung mit einer Lamelle erfolgen, die auf gleicher Höhe ebenfalls mind. eine Aussparung hat, sodass die Leimfuge durch die Wärmedämmung verläuft, also eine weitere Profilanpassungsmöglichkeft.

Ebenfalls neu ist die Lamellen- Alternative Fig.2 b. Bei dieser Modifikation werden bei mind. einer Aussparung, zwei unterschiedliche Tiefen mit zwei unterschiedlichen Breiten ausgefräst, es entstehen also links und rechts von der Oberfläche der Lamelle zur Oberfläche der Vertiefung mind. zwei Stufen, in der Regel unterschiedlich hoch. In die untere Stufe der Aussparung kann also ein weicher Dämmstoff eingelegt, in die obere Stufe der Aussparung eine Holzabdeckung, oberflächengleich mit der Lamelle, aufgeleimt werden. Darauf erfolgt erst die Aufleimung der nächsten durchgehenden Lamelle. Der Verschluss erfolgt also innerhalb der Lamellen in der auch der Dämmstoff eingebracht wurde.

Weiterhin ist neu die Lamellen- Alternative Fig. 2 c. In diesem Fall sind Ausfräsungen (Aussparungen) in einer Lamellen, die nach dem Einlegen des Wärmedämmstoffes, mit der nächsten Lamelle, weiche passend zur ersten Lamelle vorstehende, erhabene Holzabschnitte aufweist, verleimt und zusammengefügt wird.

Eine weitere neue Lamellen- Alternative Fig. 2 d, sind winkelförmig geschnittene Lamellen, die nach dem Verteimen und Zusammenfügen in der Mitte einen Hohlraum entstehen lassen, der zuvor mit Wärmedämmstoff ausgefüllt wurde. Abwandlungen sind in der Form möglich, dass in beiden Lamellen Ausfräsungen (Aussparungen) und Stege zusätzlich angeordnet werden können, wenn das Profil dadurch wärmetechnisch optimiert werden soll. Durch diese Art der Lamellen wird eine hohe Holzoptimierung erreicht.

Eine neue Art, Wärmedämmstoff in eine Lamelle einzubringen ist auch die Lamellen. Alternative Fig. 2 e. Durch einen einfachen Sägeschnitt in die Lamelle, oben schmal und unten breiter, sodass nach dem Einbringen des Wärmedämmstoffes in den schmalen Bereich, eine Art Verschiussleiste in den breiteren Bereich, gegen den Wärmedämmstoff sowie links und rechts gegen eine Stufe, eingeleimt werden kann. Der Verschluss kann auch in gleicher Breite des oberen Sägeschnitts erfolgen.

Neu sind auch Kanteln mit der Lamellen- Alternativen Fig. 2 f. Die äußeren Decklamellen sind durchgehend angeordnet. Die Lamellen dazwischen können waagerecht an einer geeigneten Stelle der Kanteln (Profile) durchgeschnitten werden, sodann werden der untere Teil sowie der obere Teil, profilbedingt entsprechend tief, ausgefräst oder durch eine Säge eingesägt. Dadurch werden Aussparungen zum Befüllen mit Wärmedämmstoff wie eine Feder beim Zusammenfügen den oberen und den unteren Teil wieder verbinden. Zwischen den Dämmaussparungen werden die dazwischen liegenden Holzstege miteinander verleimt.

Die Lamelle- Alternative Fig. 2g, ist ebenfalls neu. Jeweils zwei Lamellen werden miteinander verieimt, nachdem zuvor, auf beiden Seiten der Leimfuge halbkreisförmig, in zuvor festgelegten Abständen, Ausfräsungen erfolgen, die nach dem Einlegen einer runden Dämmschnur, passend wieder zusammen gefügt und im Bereich der Stege zwischen des Kreisen, verleimt werden. In mind. einer der Lamellen werden die halbkreisförmigen Ausfräsungen auf beiden Seiten, aber jeweils versetzt genau zwischen den beiden halbkreisförmigen Ausfräsungen der anderen Seite der Lamelle, angeordnet. Die Größen der runden Ausfräsungen sind vom Profil abhängig. Sind die Ausfräsungen im Bereich von unter 3 mm im Durchmesser, kann u.U. auf Wärmedämmstoff verzichtet werden, weil die eingeschlossene Luft ausreichend Dämmung bietet.

Eine neue Modifizierung zeigt auch die Lamellen- Alternative Fig. 2 h. Die Lamelle erhält einen Sägeschnitt in dem Wärmedämmstoff eingebracht werden soll. Konstruktionsbedingt in entsprechender Höhe, wird von unten eine breitere Ausfräsung vorgenommen - auch durch mehrere Sägeschnitte möglich -, In die eine Holzverschlussleiste eingeleimt wird, die aber ebenfalls in der Breite des oberen Sägeschnittes einen Sägeschnitt erhält, sodass eine u- förmige Verschluseleiste entsteht. Der Wärmedämmstoff wird also innerhalb der Lamelle in beiden Teilen eingebracht.

Alle Materialien sind umweltfreundlich und recycelbar, nachhaltig und in der Regel aus nachwachsenden Rohstoffen.

Alle Materialien und die die Art der Lamellen für die Kanteln sind untereinander kombinierbar und austauschbar. Es kommt auf die Dicke der gewählten Profile und auf die Anforderungen, die an die Profile gestellt werden, an.

Die Uw- Werte für die Fenstergröße 1,23 m x 1,48 m, ermittelt aus den Uf-Werten der wärmegedämmten Profile, der Dreifachverglasungen mit dem Ug-Wert von 0,7 W/m^2K und einem thermischen Randverbund des Glases mit einem Psi- Wert von 0,030 W/mK, ergeben für alle Modifizierungen Passivhaustauglichkeit mit <= 0,80 W/m^2K. Genaue Werte werden von einem Prüfnstitut ermittelt und durch ein Prüfzeugnis belegt.

## Patentansprüche

1. Kanteln für Energiesparfenster
**dadurch gekennzeichnet,**
**dass** sich die Kanteln und die Profile Fig.1 (1, 2, 3) für Fenster, Türrahmen, Dachflächenfenster und Sonderbauteilen aus mehreren verleimen Holzlamellen In der Form zusammensetzen, dass in den Lamellen- (5, 6, 9, 10, 13, 14, 15, 17,18) und den Lamellen- Alternativen Fig. 2 a-h, zuvor Ausfräsungen (Aussparungen) in unterschiedlicher Form und unterschiedlichen technischen Herstellungsverfahren vorgenommen wurden, um Wärmedämmstoff in die dadurch entstandenen Aussparungen einzuleimen bzw. einzubringen.

2. Kanteln für Energiesparfenster nach Anspruch 1,
**dadurch gekennzeichnet,**
**dass** in mind. einer Lamelle in Längsrichtung angeordnet, rechteckige Aussparungen in der Form ausgefräst und jeweils durch einen Steg getrennt sind, sodass in unterschiedlich tiefen Aussparungen Wärmedämmstoff eingeleimt bzw. eingelegt ist, bevor die offene Seite der Ausfräsungen durch die nächste ohne oder mit Ausfräsungen und Wärmedämmstoff angeleimte Lamelle geschlossen wird.

3. Kanteln für Energiesparfenster nach den Ansprüchen 1- 2,
**dadurch gekennzeichnet,**
**dass** In mind. einer Lamelle, mind. eine Ausfräsung mit mind. zwei Stufen in
der Form erfolgt, sodass mind. im Bereich einer Stufe Wärmedämmstoff eingeleimt oder eingelegt wird und mind. in dem Bereich einer Stufe ein Verschluss durch einen eingeleimten Holzstreifen, alles innerhalb der Lamelle, erfolgt, bevor eine weitere Lamelle, geschlossen oder nach einem der modifizierten Ansprüche, dagegen geleimt wird.

4. Kanteln für Energfesparfenster nach den Ansprüchen 1 - 3,
**dadurch gekennzeichnet,**
**dass** in mind. einer Lamelle, mind. eine Ausfräsung mit mind. zwei Stufen in der Form erfolgt, sodass mind. im Bereich einer Stufe Wärmedämmstoff eingeleimt oder eingelegt wird und mind. in dem Bereich einer Stufe ein Verschluss durch die nächste Lamelle vorgenommen wird, indem die Anschluss- Lamelle gegenüber ihrer überwiegenden Oberfläche eine Erhöhung aufweist, die genau in die Stufe der ersten Lamelle passt, oder bei mind. einer einfachen Ausfräsung der ersten Lamelle, wo die Erhöhung der Anschluss-Lamelle genau in die einfache Ausfräsung passt, die Aussparung verschließt und die Verleimung mit der Oberfläche der Anschlusa-Lamelle und den Stegen bzw. mind. einer Stufe der ersten Lamelle, erfolgt.

5. Kanteln für Energlesparfenster nach den Ansprüchen 1 - 4,
**dadurch gekennzeichnet,**
**dass** durch das miteinander Verleimen von zwei winkeiförmig geschnittenen Lamellen ein Hohlraum entsteht, der zuvor mit Wärmedämmstoff ausgefüllt wurde.

6. Kanteln für Energiesparfenster nach den Ansprüchen 1 - 5,
**dadurch gekennzeichnet,**
**dass** mind, in einer Lamelle ein Sägeschnitt in der Form erfolgt, das in den Sägeschnitt entsprechend dem Profil ein Wärmedämmstoff eingeleimt bzw. eingebracht und dass ein Verschluss innerhalb der Lamelle durch eine Verschiussleiste in Breite des Sägeschnittes gegen die Wärmedämmung oder eine verbreiterte Verschlussleiste, die gegen die Wärmedämmung und links und rechts gegen eine Stufe eingeleimt wird.

7. Kanteln für Energiesparfenster nach den Ansprüchen 1 - 6,
**dadurch gekennzeichnet,**
**dass** mind. eine Lamelle zwischen den durchgehenden Deckhölzern, waagerecht in der Form an geeigneter Stelle aufgeschnitten wird, sodass in beiden Teilen genau gegenüberliegend Sägeschnitte, in der Regel in beiden Teilen unterschiedlich tief erfolgen, Wämedämmstoff in den Abmessungen der Addition der gegenüberliegenden Sägeschnitttiefen in einer Hälfte und die andere Hälfte dann darüber gestülpt, eingeleimt bzw. eingebracht wird, wobei die Stege zwischen den Sägeschnitten eine feste Verbindung eingehen.

8. Kanteln für Energiesparfenster nach den Ansprüchen 1 - 7,
**dadurch gekennzeichnet,**
**dass** mind. zwei Lamellen vor der Verleimung, jeweils gegenüberliegend halbkreisförmige Aussparungen erhalten, die nach dem Einlegen einer Dämmschnur im Bereich der Stege zwischen den halbkreisförmigen Aussparungen, zusammengeleimt werden, wobei mind. eine Lamelle auch halbkreisförmige Aussparungen auf beiden Seiten, aber versetzt erhalten kann, sodass entsprechend dem Profil in allen geeigneten Lamellen unterschiedlich viele Kreise, die mit einer Dämmschnur versehen werden können entstehen, allerdings kann auf Wärmedämmung in Kreisen, die einen Durchmesser von weniger als 3 mm haben verzichtet werden, da eingeschlossene Luft auch ein guter Wärmedämmstoff ist.

9. Kanteln für Energiesparfenster nach den Ansprüchen 1 - 8,
**dadurch gekennzeichnet,**
**dass** in mind. einer Lamelle ein Sägeschnitt, entsprechend den Anforderungen und im unteren Bereich eine breite Aussparung durch mehrere Sägeschnitte oder Ausfräsung erfolgt, wobei die untere Aussparung mit einer eingeleimten Verschiussleiste, die ebenfalls einen Sägeschnitt in gleicher Breite des oberen Sägeschnittes und genau in Verlängerung erhält, sodass eine u-förmige Verschlussfeiste entsteht, die zusammen mit dem oberen Sägeschnitt Wärmedämmung aufnehmen kann.

10. Kanteln für Energiesparfenster nach den Ansprüchen 1 - 9,
**dadurch gekennzeichnet,**
**dass** alle technischen Varianten und die Materialien, aus den Anmeldungen DE 20 2004 004 876 U1, DE 20 2010 004 095.7 und dieser Anmeldung miteinander kombinierbar sind.
